(19) Europäisches Patentamt
European Patent Office
Office européen des brevets

(11) **EP 2 194 363 A1**

(12) **EUROPÄISCHE PATENTANMELDUNG**

(43) Veröffentlichungstag:
**09.06.2010  Patentblatt 2010/23**

(51) Int Cl.:
***G01F 23/292*** (2006.01)

(21) Anmeldenummer: **09177989.2**

(22) Anmeldetag: **04.12.2009**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**AL BA RS**

(30) Priorität: **06.12.2008   DE 102008060960**

(71) Anmelder: **Boehringer Ingelheim Pharma GmbH & Co. KG**
**55216 Ingelheim am Rhein (DE)**

(72) Erfinder:
• **Lichtblau, Christina**
  **55216 Ingelheim am Rhein (DE)**

• **Bassarab, Stefan**
  **55216 Ingelheim am Rhein (DE)**
• **Bechtold-Peters, Karoline**
  **55216 Ingelheim am Rhein (DE)**
• **Brader, Christian**
  **55216 Ingelheim am Rhein (DE)**

(74) Vertreter: **Hammann, Heinz et al**
**Boehringer Ingelheim GmbH & Co. KG**
**CD Patents**
**Binger Straße 173**
**55216 Ingelheim am Rhein (DE)**

(54) **Optische Füllstandsmessung**

(57)    Die Erfindung betrifft die optische Füllstands-messung bei der aseptischen Abfüllung von Biopharmazeutika. Das erfindungsgemäße Verfahren ermöglicht insbesondere die In-Prozess-Füllstandsmessung bei mit Proteinlösung befüllten Primärpackmitteln mit kleinen Volumina und erheblichen Packmittelschwankungen. Weiterhin betrifft die Erfindung eine Apparatur gemäß Abbildung 5B.

ABBILDUNG 1

| | |
|---|---|
| 1a: | Kamera |
| 1b: | Objektiv |
| 2a: | Hintergrundbeleuchtung |
| 2b: | Steuerung Hintergrundbeleuchtung |
| 3: | Externer Trigger |
| 4: | Befülltes Primärpackmittel, z.B. Vial |
| 5: | Controller |
| 6a: | PC/ Laptop |
| 6b: | Steuerkonsole |
| 7: | Monitor |

EP 2 194 363 A1

**Beschreibung**

TECHNISCHES GEBIET

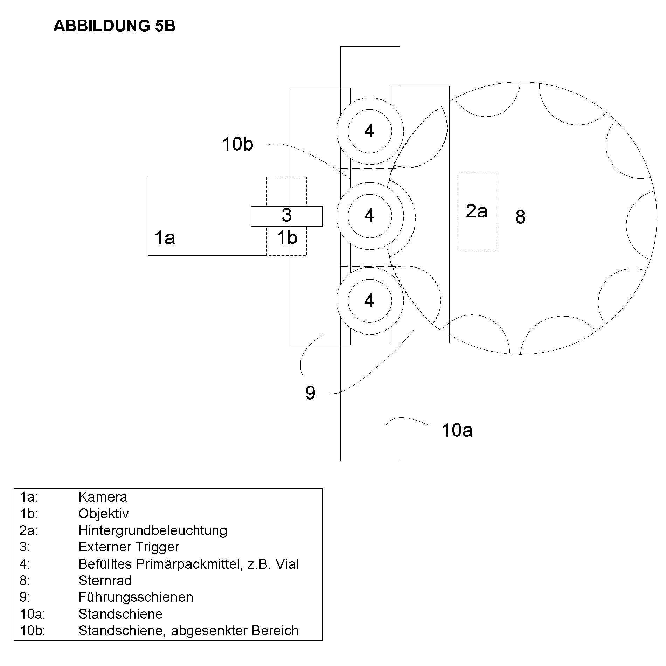

Die Erfindung betrifft das Gebiet der optischen Füllstandsmessung bei der aseptischen Abfüllung von Biopharmazeutika. Das erfindungsgemäße Verfahren ermöglicht insbesondere die In-Prozess-Füllstandsmessung bei mit Proteinlösung befüllten Primärpackmitteln mit kleinen Volumina und erheblichen Packmittelschwankungen. Weiterhin betrifft die Erfindung eine Apparatur gemäß Abbildung 5B.

HINTERGRUND

Der momentane Standard in der Pharmatechnik/ bei den Herstellern von Abfüllanlagen für die In-Prozess-Füllmengenbestimmung ist die Differenzwägung, d.h. der zu befüllende Container/ das Vial wird zunächst leer gewogen, befüllt und anschließend erneut gewogen. Daraus ergibt sich das Füllgewicht und über die Dichte der Flüssigkeit das Füllvolumen.

Um Schwankungen/ Veränderungen bei der Füllmenge während des laufenden Prozesses frühzeitig zu erkennen, sollen möglichst viele, z.B. jedes fünfte, Vial kontrolliert werden. Bei einer durchschnittlichen Maschinenleistung von z.B. 2000 Vials/h wären dazu mehrere, hochpräzise Wägezellen nötig, die sehr teuer sind. Außerdem werden diese Wägezellen fest in eine Abfülllinie/ -anlage integriert. Im Bereich Clinical Supplies & Process Transfer der G Pharma Development werden Klinikmuster und Produkte für Studien- und Entwicklungszwecke hergestellt. Im Gegensatz zu Produktionsbereichen werden hier ständig wechselnde Produkte und Packmittelformate auf unterschiedlichen Abfüllanlagen gehandhabt. Eine Nachrüstung bereits bestehender/ älterer Abfüllanlagen mit Wägezellen ist nicht möglich bzw. zu teuer.

Bisher wird im Bereich Clinical Supplies & Process Transfer eine manuelle Differenzwägung alle 15 min durchgeführt. Hierzu wird ein leeres Vial durch einen Mitarbeiter aus dem Prozess entnommen, gewogen, markiert und wieder in die Abfüllanlage eingeschleust. Nach der Befüllung wird das Vial erneut gewogen. Durch die Herausnahme des Vials aus dem laufenden Prozess, muss es anschließend verworfen werden. Außer dem dabei entstehenden Ausschuss hat diese Methode zwei Nachteile.

Zum einen sollen manuelle Eingriffe durch die Mitarbeiter während einer aseptischen Abfüllung weitestgehend vermieden werden und zum anderen kann durch den zeitlichen Aufwand der manuellen Differenzwägung nur ein minimaler Bruchteil der Vials auf korrekte Füllmenge kontrolliert werden.

ZUSAMMENFASSUNG DER ERFINDUNG

Die Messung des Füllstandes mit Hilfe einer Kamera und die direkte Berechnung des resultierenden Füllvolumens durch den Controller bieten eine Alternative zu Wägezellen. Die Vials müssen bei dieser berührungslosen In-Prozess-Kontrolle nicht aus dem Prozess entnommen werden. Die Maschinenleistung wird durch diese zusätzliche Messung nicht beeinträchtigt. Wird ein Vial detektiert, dessen Füllmenge außerhalb der vorgegebenen Toleranz liegt, kann dies durch ein optisches oder akustisches Signal angezeigt werden. Eine Anbindung des Kamerasystems an die Speicherprogrammierbare Steuerung der Abfüllanlage ist ebenfalls möglich, so dass bei Über- oder Unterfüllung ein Maschinenstopp erfolgt.

Bei der Umsetzung der optischen Füllstandsmessung für die biopharmazeutische Abfüllung ergeben sich folgende technische Probleme bzw. Herausforderungen:

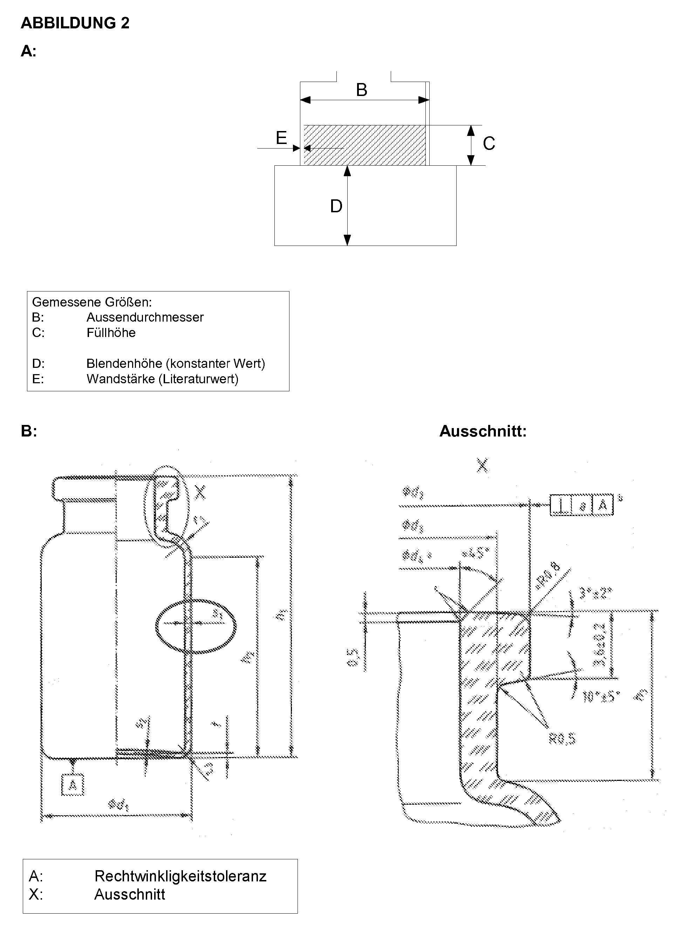

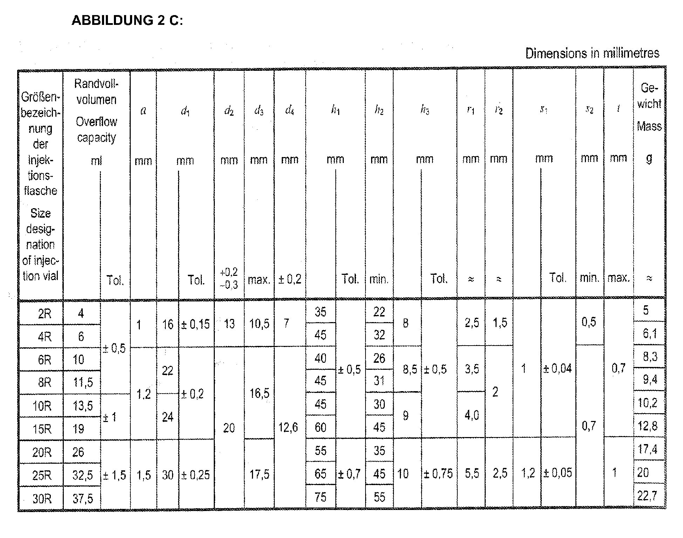

- bestehende Packmitteltoleranzen in den Abmaßen (z.B. bei 2R Vials in der Gesamthöhe +/- 0.5 mm, Außendurchmesser +/- 0.15 mm, Bodenwölbung..., siehe hierzu Abbildung 2B und C),
- Bewegung der Flüssigkeit auf schnelltourigen Maschinen,
- Vibrationen und Schwappen,
- Schaumbildung aufgrund von Proteinabfüllung,
- besondere Anforderungen bei der aseptischen Abfüllung wie Vermeidung manueller Eingriffe,
- kleiner Maßstab (i.d.R. 0.5 mL bis 50 mL).

Es ergibt sich somit die Aufgabe, eine Methode zur optischen Füllstandsmessung bei der aseptischen Abfüllung von Biopharmazeutika bereit zu stellen, die exakte, reproduzierbare, Messergebnisse liefert (insbesondere in-line Messergebnisse) trotz bestehender Packmitteltoleranzen bei kleinen Volumina, Bewegung der Flüssigkeit, Schwappen, Schaumbildung.

Es ergibt sich weiterhin die Aufgabe, eine entsprechende Apparatur für die optische Füllstandsmessung bereit zu stellen.

Die vorliegende Erfindung löst die Aufgabe durch die Bereitstellung eines Verfahrens zur optischen Füllstandsmessung bei der aseptischen Abfüllung von Biopharmazeutika umfassend die folgenden Schritte:

a. Transportieren eines mit einer Proteinlösung befüllten durchsichtigen Primärpackmittels (4), wobei das Füllvolumen kleiner bzw. gleich 100ml beträgt,
b. Vorbeiführen des befüllten Primärpackmittels (4) an einer Kamera (1a) mit Beleuchtung,
c. Steuerung der Bilderfassung über einen externen Trigger (3), der mit der Kamera (1a) über einen Controller (5) verknüpft ist,
d. Ausgabe des Messergebnisses über den Controller (5),
e. Anzeige auf einem Monitor (7) oder auf einem angeschlossenen PC (6a);

wobei das Primärpackmittel (4) zum Zeitpunkt der Messung vereinzelt wird und hängt.

Das Meßergebnis wird direkt auf einem Monitor oder auf einem angeschlossenen PC angezeigt. Insbesondere geeignet ist dieses Verfahren für die In-Prozeß-Füllstandsmessung.

Essentielle Aspekte dieses Verfahrens sind:

- Primärpackmittel /Vials müssen hängen und zwar möglichst gerade,
- Primärpackmittel /Vials müssen vereinzelt werden
- Primärpackmittel- /Container-/Vialmaterial muss durchsichtig sein, z.B. aus Glas oder aus durchsichtigem Kunststoff.

Vereinzelung und Aufhängung sind wichtig für die exakte Erfassung jedes einzelnen Vials und Bodens bei Vials bzw. der unteren Kante von z.B. Karpulen. Durch die Vereinzelung besteht zusätzlich die Möglichkeit, bei Bedarf den Außendurchmesser des Vials/ der Karpule zu vermessen. Demgemäß sind in einer bevorzugten Ausführungsform Vereinzelung und Aufhängung insbesondere wichtig für die exakte Vermessung des Außendurchmessers und der Bodenwölbung von Vials bzw. der unteren Kante von z.B. Karpulen.

So können bei der optischen Füllstandsmessung die erheblichen Packmittelschwankungen (siehe Abbildung 2B und C) mit gemessen und anschließend herausgerechnet bzw. kompensiert werden. Die erheblichen Packmittelschwankungen, insbesondere bei der Bodenwölbung von in der biopharmazeutischen Abfüllung gängigen Vials, wie z.B. 20R und 2R Vials, die aus Röhrenglas gefertigt werden, ist herstellungsbedingt, da der Boden zwangsgeformt wird.

Bei der herkömmlichen Abfüllung werden die Primärpackmittel stehend passiv weitergeschoben. Hierbei berühren sich die Primärpackmittel und der Außendurchmesser sowie der Boden bzw. die Bodenwölbung können nicht exakt erkannt bzw. vermessen werden.

Für die Berechnung des tatsächlichen Füllvolumens aus der gemessenen Füllhöhe sind die folgenden geometrischen Maße eines Vials entscheidend (s. Abbildung 2C):

- Außendurchmesser $d_1$
- Wandstärke $s_1$
- Ausformung des Vialbodens bedingt durch

    o Bodenstärke $s_2$
    o Bodenwölbung t
    o Radius $r_2$

Da der Außendurchmesser $d_1$ relativ großen Toleranzen von fast $\pm$ 10% unterworfen ist, sollte er für exakte Ergebnisse beim Füllvolumen mit vermessen werden. In einer bevorzugten Ausführungsform muss $d_1$ für exakte Ergebnisse beim Füllvolumen mit vermessen werden. Dazu ist es notwendig, dass sich die Glaskörper im Bereich der Messung nicht berühren sondern vereinzelt werden. Für die Wandstärke $s_1$ wird der Literaturwert gemäß Abbildung 2C verwendet. Wird der Außendurchmesser $d_1$ nicht vermessen, wird wie für-die Wandstärke $s_1$ der Literaturwert für $d_1$ gemäß Abbildung 2C verwendet.

Da die Maße des Vialbodens $s_2$, t, $r_2$ aufgrund des Herstellprozesses nur mit minimalen bzw. maximalen Toleranzen versehen sind und daher die Ausformung des Bodens insgesamt großen Schwankungen unterworfen sein kann, empfiehlt es sich eine Vermessung des Vialbodens in die Berechnung zum Füllvolumen miteinzubeziehen. In einer bevorzugten Ausführungsform muss eine Vermessung des Vialbodens in die Berechnung zum Füllvolumen mit einbezogen werden.

Für eine bessere Bildaufnahme des Bodenbereichs und eine bessere Vermessbarkeit, ist es notwendig, dass die Vials nicht stehen und die Standschiene berühren, sondern hängen.

Zudem ist für die genaue Messung des Füllvolumens die richtige Einstellung bzw. der richtige Abstand zwischen Kameraoptik und Hintergrundbeleuchtung wichtig.

Für die Berechnung des Füllvolumens bei Vials /Injektionsflaschen ergibt sich bevorzugt folgende Formel:

$$[(MW\ Füllhöhe - Bodenstärke * 0.9) * \pi * (MW\ Außendurchmesser - 2 * Wandstärke\ s_1)^2/4)] / 1000$$

Bei dem Faktor 0.9 handelt es sich um einen empirisch ermittelten Wert, der die Bodenwölbung des 2R-Vials berücksichtigt. Für jedes Primärpackmittel ergibt sich ein spezifischer, empirisch ermittelter Faktor.

Weiterhin wird folgende Formel angewendet, wenn Außendurchmesser und Bodenwölbung nicht mit vermessen werden:

$$[(MW\ Füllhöhe - Bodenstärke) * \pi * (Außendurchmesser\ d_1 - 2 * Wandstärke\ s_1)^2/4)] / 1000$$

Für die Bodenstärke wird hier ein konstanter Faktor angenommen, z.B. 1,8 mm bei 20R Vials, der für jedes Vialformat empirisch ermittelt wird.

Für den Außendurchmesser $d_1$ und die Wandstärke $s_1$ werden die Literaturwerte gemäß Abbildung 2C verwendet.

Für Karpulen und Fertigspritzen ergibt sich eine leicht angepasste Formel zur Berechnung des Füllvolumens. Bei Karpulen dient als Bezugspunkt für die Unterkante vorzugsweise der Stopfen, bei Fertigspritzen z.B. die Spritzenschulter.

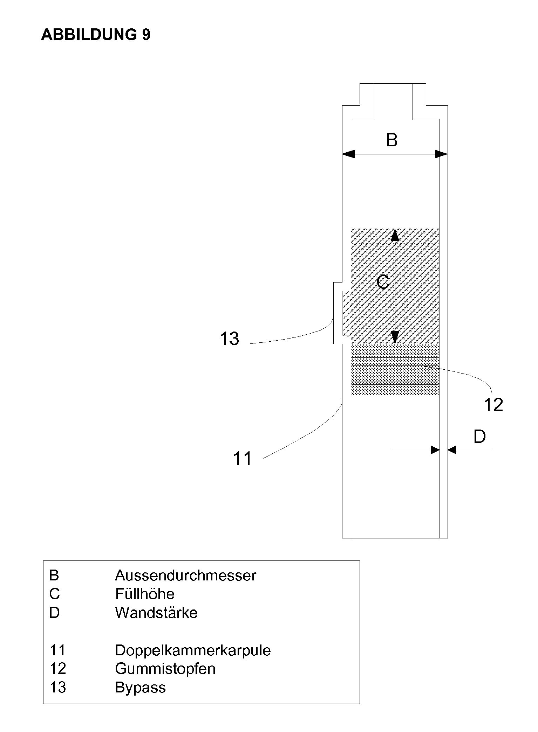

Abbildung 9 zeigt als Beispiel die Füllvolumenbestimmung in der vorderen Kammer einer Doppelkammerkarpule. Die Formel hierfür lautet bevorzugt:

$$[MW\ Füllhöhe\ C * \pi * (Außendurchmesser\ B - 2 * Wandstärke\ D)^2/4)] / 1000 + X$$

Für den Außendurchmesser B kann entweder der Kameramesswert oder die Maßangabe der technischen Zeichnung verwendet werden. Die Wandstärke D wird der technischen Zeichnung entnommen. X beschreibt eine konstante Milliliterangabe, die theoretisch dem Volumen im Bypass entspricht und zu jeder Messung addiert wird.

Weiterhin umfasst die vorliegende Erfindung eine Apparatur gemäß Abbildung 5B, welche zur Vereinzelung der Primärpackmittel ein Sternrad (8) enthält. Die erfindungsgemäße Apparatur besteht aus einem Kamerasystem (1a), einer Vorrichtung zur Vereinzelung der Primärpackmittel (4) und einer Vorrichtung zur Aufhängung (9) der Primärpackmittel. Die erfindungsgemäße Apparatur ist eine Vorrichtung zur optischen Füllstandsmessung. Die Vereinzelung erfolgt bevorzugt über ein Sternrad. Das Sternrad ist vorteilhaft gegenüber der passiven Weiterbeförderung, da hier eine berührungsfreie Vereinzelung stattfindet. Das Sternrad ist einfacher als eine elektrische Schranke oder ein Transportband, da es keine separate Steuerung benötigt.

Die Vorrichtung zur Aufhängung ist essentiell für die Messgenauigkeit, die mit der Apparatur erzielt werden kann. In der Getränkeindustrie werden Primärpackmittel wie Flaschen i.d.R. stehend auf Transportbändern vermessen, da hier die Anforderungen an die Genauigkeit bei der Abfüllung nicht so hoch sind wie in der Abfüllung von Biopharmazeutika.

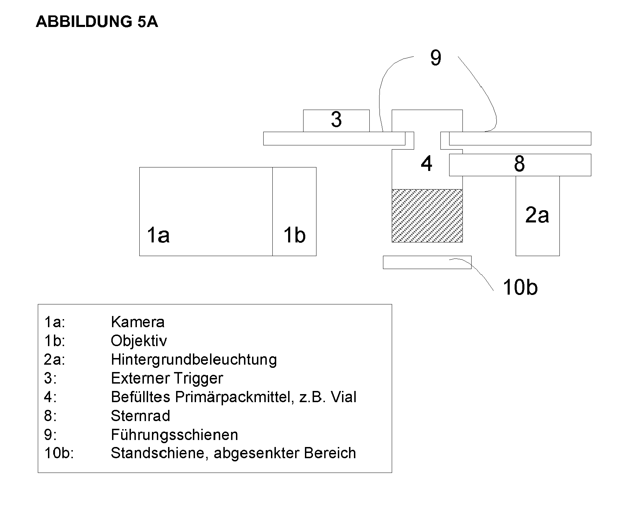

Die Führung der Primärpackmittel /Vials erfolgt über zwei Schienen im Halsbereich, an denen die Vials mit ihrem Rollrand aufgehängt werden (siehe Abbildung 5 A + B). Die Standschiene wird im Bereich der Kameraaufnahme z. B. nach unten abgesenkt (zwischen den gestrichelten Linien in Abb. 5 B), um eine klare Abgrenzung des Vialbodens zu ermöglichen.

Bei der optischen Füllstandsmessung der vorliegenden Erfindung handelt sich um eine berühungslose, zerstörungsfreie, entfernungsfreie, stoppfreie Methode der Füllstandsmessung, bevorzugt der In-Prozess- Füllstandsmessung, in durchsichtigen Containern (Vials / Injektionsflaschen / Fertigspritzen / Karpulen).

Im Vergleich zur manuellen und automatischen Differenzwägung ist das erfindungsgemäße Verfahren schneller. Dies führt zu einer höheren Anzahl an kontrollierten Containern, ohne die Maschinengeschwindigkeit verringern zu müssen. Eine vergleichbar hohe Kontrollfrequenz ohne Reduktion der Maschinengeschwindigkeit wäre mit der Differenzwägung nicht bzw. nur unter Verwendung mehrerer Wägezellen möglich. Zudem ist die manuelle Differenzwägung nur stichprobenartig möglich. Das Vial muss nach der Differenzmessung zerstört werden (da manuelle Entnahme). Die optische Füllstandsmessung der vorliegenden Erfindung ist jedoch nicht zerstörerisch.

Mit der vorliegenden Erfindung kann eine hervorragende reproduzierbare Genauigkeit von über 90% erzielt werden. Siehe hierzu Beispiel 2 ab Seite 17 beschrieben unter 2R Vials auf B&S Nr. 4, Führung der Vials auf Standschiene, Versuchsanordnung (1), bei der der Anteil an Gut-Messungen 93,6% beträgt. Bevorzugt beträgt die reproduzierbare Genauigkeit und somit die Gut-Messungen über 95%, besonders bevorzugt über 99,9%. Mit der vorliegenden Erfindung kann eine hervorragende reproduzierbare Genauigkeit von +/- 2% der tatsächlichen Füllmenge bei Füllvolumina >= 1,0 mL in über 95% bzw. von +/-3% in über 99% der Messungen erzielt werden. Für Füllvolumina < 1,0 mL wird eine reproduzierbare Genauigkeit von +/- 5% - bevorzugt von +/- 3% - der tatsächlichen Füllmenge in über 95% der Messungen erreicht. Siehe hierzu Beispiel 3 ab Seite 24 beschrieben.

Als "Fehlmessungen" werden alle Messergebnisse bezeichnet, bei denen eine korrekte Berechnung des Füllvolumens nicht möglich ist. Mögliche Ursachen für solche Fehlmessungen sind die Verwendung falscher Kanten bei der geometrischen Vermessung des Kamerabildes oder dass die notwendigen Bezugskanten gar nicht vom Programm gefunden werden. Wird das zu vermessende Primärpackmittel z.B. auf einer Seite von einem anderen Primärpackmittel berührt, so findet das Kameraprogramm keine oder eine falsche Referenzkante für den Bezug der Messfenster bzw. zur Vermessung des Außendurchmessers.

Weitere Vorteile des erfindungsgemäßen Verfahrens sind:

- kostengünstiger als Wägezellen
- platzsparender als Wägezellen
- ein Kamerasystem ist prinzipiell an jeder Abfüllanlage anwendbar/ kann auf verschiedene Anlagen übertragen werden/ kann i.d.R. nachgerüstet werden

Das erfindungsgemäße Verfahren findet Anwendung bei:

- der Messung des Füllstands bei der aseptische Abfüllung von Flüssigkeiten, v.a. Biopharmazeutika, in Vials, Fertigspritzen, Karpulen, Ampullen...
- der Detektion der Stopfenposition in Fertigspritzen oder Karpulen.

Da bei Karpulen und Doppelkammerkarpulen vor dem Befüllen mit Proteinlösung der End- bzw. Mittelstopfen gesetzt wird, muss dessen Gewicht bei der Differenzwägung mitberücksichtigt werden. Für die manuelle Differenzwägung würde das bedeuten, dass die zu wiegende Karpule nach dem Setzen des Stopfens vor dem Befüllen für die Brutto-Wägung aus dem Prozess entnommen werden müsste. Ebenso müsste auch das Wiedereinsetzen in den Prozess an einem Punkt nach dem Stopfensetzen vor dem Befüllen erfolgen. Bei der kompakten Bauweise der Abfüllanlagen, die in der Entwicklung verwendet werden, kann dieses Vorgehen i.d.R. praktisch nicht realisiert werden.

Die optische Füllstandsmessung wie sie z.B. in der Getränkeindustrie Verwendung findet löst nicht die Aufgabe der vorliegenden Erfindung, da

a) die Abfüllung dort nicht unter vergleichbaren aseptischen Bedingungen ablaufen muss wie in der pharmazeutischen Abfüllung (keine damit verbundenen Problemen, manuelle Entnahme möglich, keine GMP Regularien...) und
b) der kleine Maßstab in der pharmazeutischen Abfüllung /bei der vorliegenden Erfindung eine deutlich höhere Messgenauigkeit erfordert. Das Füllvolumen beträgt insbesondere kleiner oder gleich 100ml, bevorzugt kleiner oder gleich 75ml, kleiner oder gleich 50ml, kleiner oder gleich 25ml, insbesondere bevorzugt kleiner oder gleich 20ml. Das Füllvolumen liegt insbesondere in einem Bereich von 100ml bis 0.5ml, 50ml bis 0.5ml, bevorzugt in einem Bereich von 25ml bis 2ml bzw. 20ml bis 1ml und besonders bevorzugt in einem Bereich von 2ml bis 0.5ml.

Der Effekt des Schäumens, der bei der Abfüllung von Proteinlösungen häufig auftritt, erschwert die optische Füllstandsmessung erheblich. Dies ist eine zusätzliche technische Herausforderung bei der optische Füllstandsmessung von Proteinlösungen, insbesondere von Antikörperlösungen (siehe z.B. Beispiel 3 BI-Mab 1000b). Durch die Anwendung des erfindungsgemäßen Verfahrens bzw. der erfindungsgemäßen Apparatur befinden sich die gemessenen Füllvolumina allerdings trotz Schaumbildung innerhalb enger Toleranzen und weisen hervorragende reproduzierbare Genauigkeit auf (siehe oben). Die Messwerte der mit Proteinlösung durchgeführten Versuchsreihen zeigen sogar vergleichbare Ergebnisse wie die Messwerte der mit Wasser durchgeführten Versuchsreihen.

Experimentell zeigt sich zudem, je größer das Füllvolumen ist, umso geringer sind die prozentualen Abweichungen der gemessenen Werte vom tatsächlichen Füllvolumen. Das bedeutet, bei den geringen Füllvolumina in der biopharmazeutischen Abfüllung ist eine exakte optische Füllstandsmessung eine erheblich größere technische Herausforderung als bei großen Füllvolumina z.B. in der Getränkeindustrie.

## BESCHREIBUNG DER ABBILDUNGEN

Bei den nachfolgend beschriebenen Abbildungen werden durchgehend folgende Abkürzungen bzw. Kürzel verwendet:

| 1 a: | Kamera |
|------|--------|

(fortgesetzt)

| | |
|---|---|
| 1b: | Objektiv |
| 2a: | Hintergrundbeleuchtung |
| 2b: | Steuerung Hintergrundbeleuchtung |
| 3: | Externer Trigger |
| 4: | Befülltes Primärpackmittel, z.B. Vial |
| 5: | Controller |
| 6a: | PC/ Laptop |
| 6b: | Steuerkonsole |
| 7: | Monitor |
| 8: | Sternrad |
| 9: | Führungsschiene |
| 10a: | Standschiene |
| 10b: | Standschiene, abgesenkter Bereich |
| | |
| A: | Rechtwinkligkeitstoleranz |
| B: | Außendurchmesser |
| C: | Füllhöhe |
| D: | Blendenhöhe (konstanter Wert) |
| E: | Wandstärke (Literaturwert) |
| X: | Ausschnitt |

ABBILDUNG 1: MESSPRINZIP

Schemazeichnung zum Funktionsprinzip der optischen Füllstandsmessung mittels Kamerasystem.

ABBILDUNG 2: VORVERSUCHE

A: Schemazeichnung zum Messprinzip der Vorversuche

B: Injektionsflaschen aus Röhrenglas (gemäß EN ISO 8362-1:2004) mit vergrößertem Ausschnitt X des Halsbereiches; A = Rechwinklingkeitstoleranz, R = Radius

C: Dimensionsangaben zu den Injektionsflaschen in Millimetern; Insbesondere die Toleranzen bei $d_1$ und bei der Ausformung des Vialbodens zeigen starke Schwankungen, wohingegen diejenigen bei $s_1$ vernachlässigbar sind.

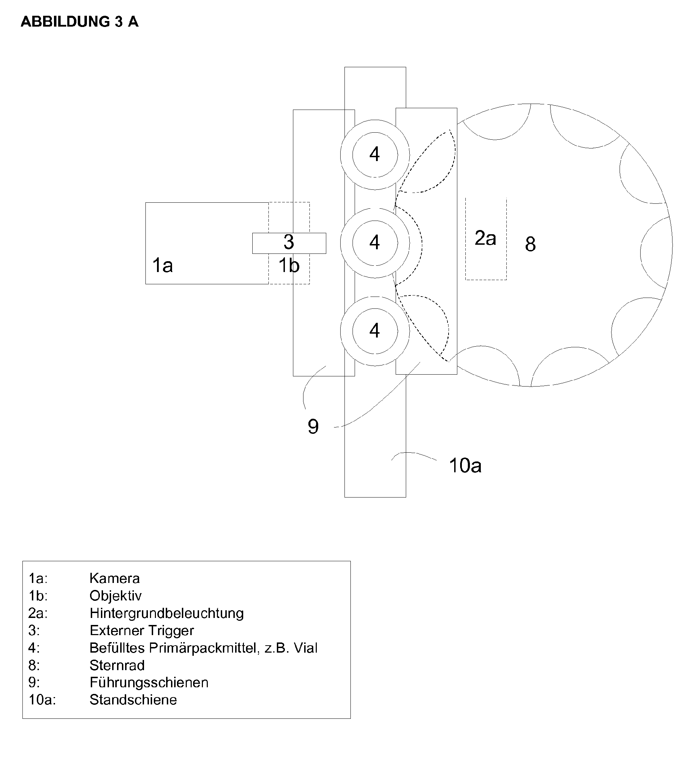

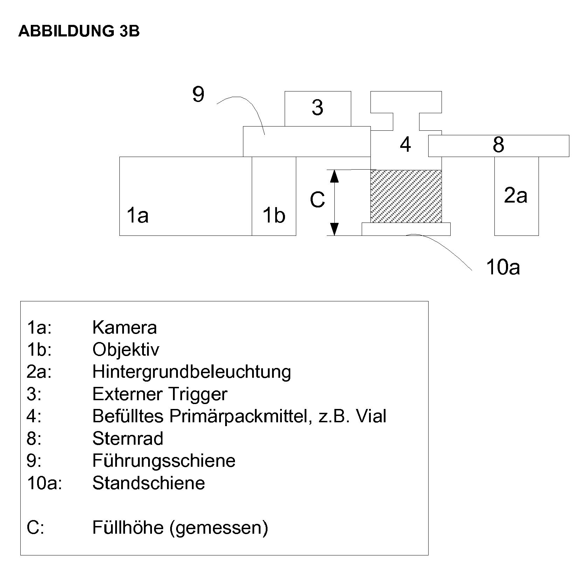

ABBILDUNG 3: FÜHRUNG VON VIALS AUF STANDSCHIENE

Schemazeichnungen:

A: Vialvereinzelung mittels Sternrad

B: Vialführung und Positionierung der Kamera und Hintergrundbeleuchtung

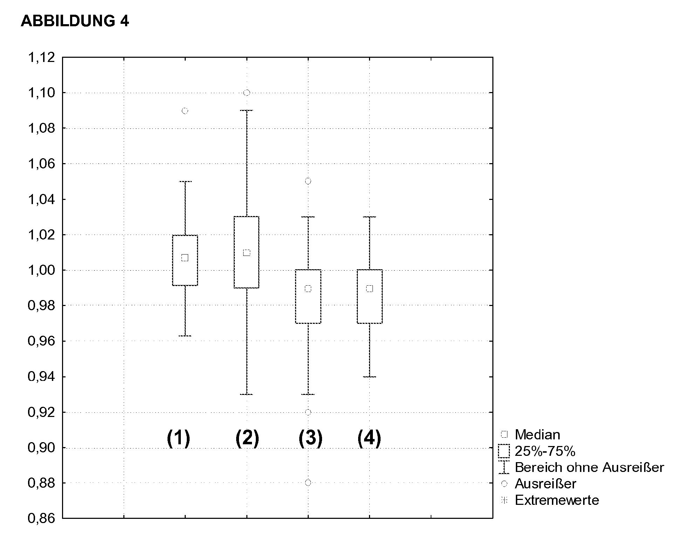

ABBILDUNG 4: BOX-PLOT DER VERSUCHE (1) BIS (4)

Grafische Darstellung zum Vergleich der Messgenauigkeit.
Die Y-Achse entspricht dem Füllvolumen in Millilitern. Die 4 Messreihen auf der X-Achse entsprechen den Versuchsanordnungen wie in Beispiel 2 ab Seite 16 beschrieben unter 2R Vials auf B&S Nr. 4, Führung der Vials auf Standschiene.

ABBILDUNG 5: HÄNGENDE FÜHRUNG DER VIALS

A: Schemazeichnung zur hängenden Führung der Vials

B: Schemazeichnung Apparatur zur Vialvereinzelung bei hängender Führung

Die Führung der Vials erfolgt über zwei Führungsschienen (9) im Halsbereich, an denen die Vials mit ihrem Rollrand aufgehängt werden. Die Standschiene wird im Bereich der Kameraaufnahme nach unten abgesenkt (10b) (zwischen den gestrichelten Linien), um eine klare Abgrenzung / Darstellung des Vialbodens zu ermöglichen.

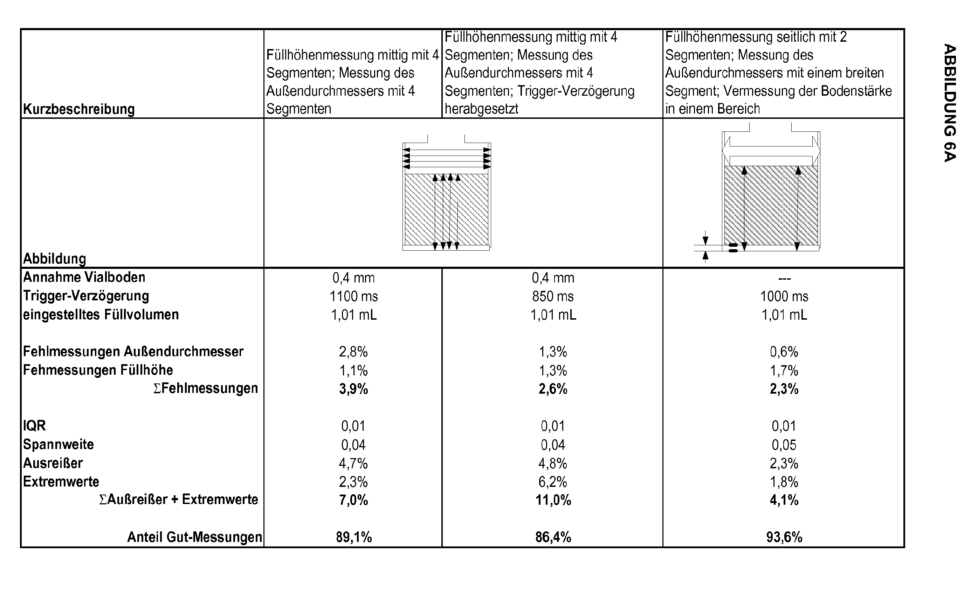

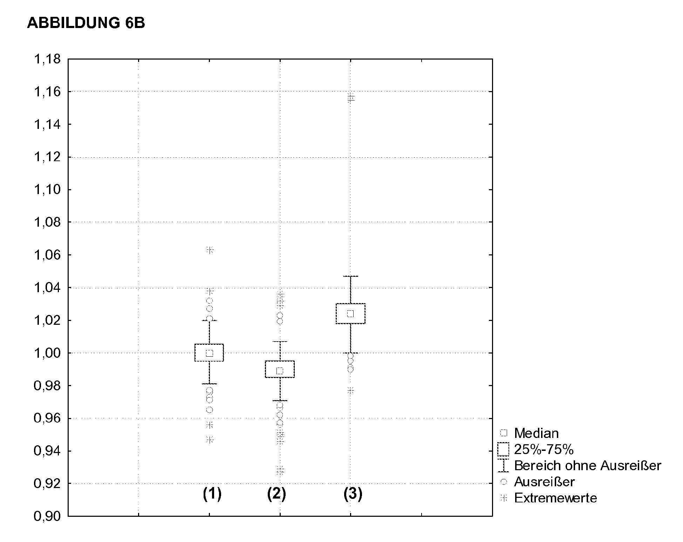

ABBILDUNG 6: VERSUCHSREIHEN MIT HÄNGEND VERMESSENEN VIALS

A: Tabellenübersicht zum Versuchsprinzip bzw. -aufbau und den statistischen Ergebnissen.
B: Grafische Darstellung der Ergebnisse aus 6A

Die Y-Achse entspricht dem Füllvolumen in Millilitern.

1) Füllhöhenmessung mittig mit 4 Segmenten; Messung des Außendurchmessers mit 4 Segmenten = 89.1% Gut-Messungen,
2) Füllhöhenmessung mittig mit 4 Segmenten; Messung des Außendurchmessers mit 4 Segmenten; Trigger-Verzögerung herabgesetzt = 86.4% Gut-Messungen,
3) Füllhöhenmessung seitlich mit 2 Segmenten; Messung des Außendurchmessers mit einem breiten Segment; Vermessung der Bodenstärke in einem Bereich = 93.6% Gut-Messungen.
Versuchsanordnung 3 ist bevorzugt. Hiermit wird der höchste Anteil an Gut-Messungen erzielt.

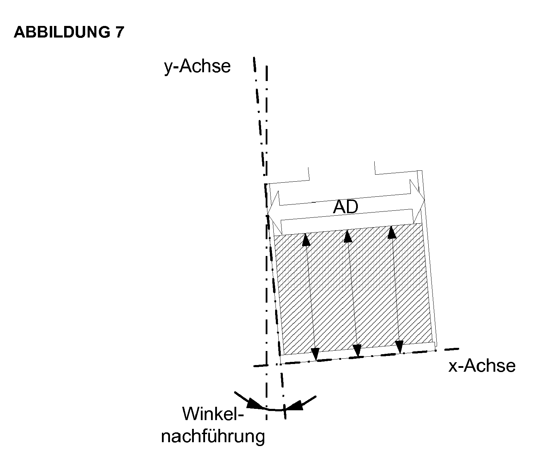

ABBILDUNG 7: SCHEMAZEICHNUNG ZU BEISPIEL 3

Die Kameraprogramme wurden für eine Steigerung der Präzision optimiert u.a. durch Nachführung der Messfenster in x- und y-Richtung sowie Winkelausgleich entlang der y-Achse bei leicht schräg hängenden Vials.

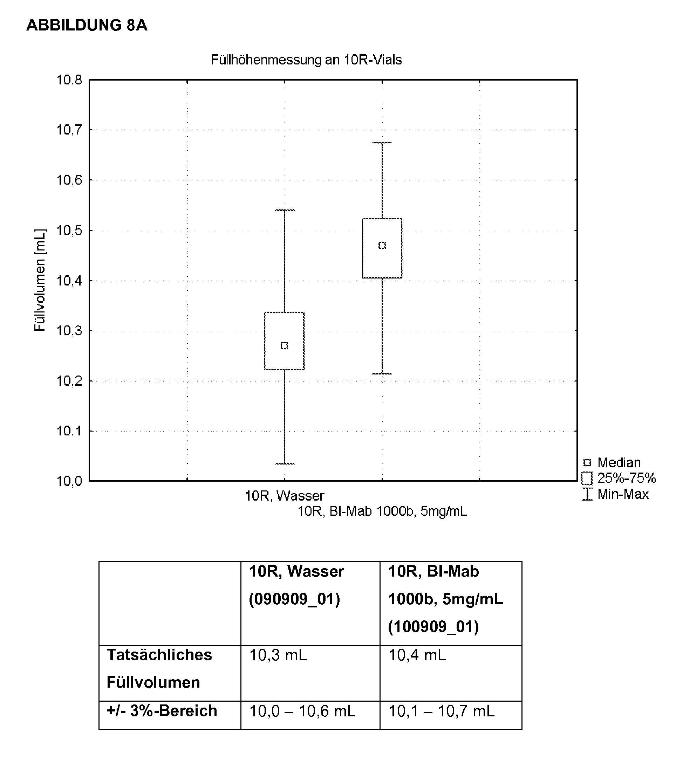

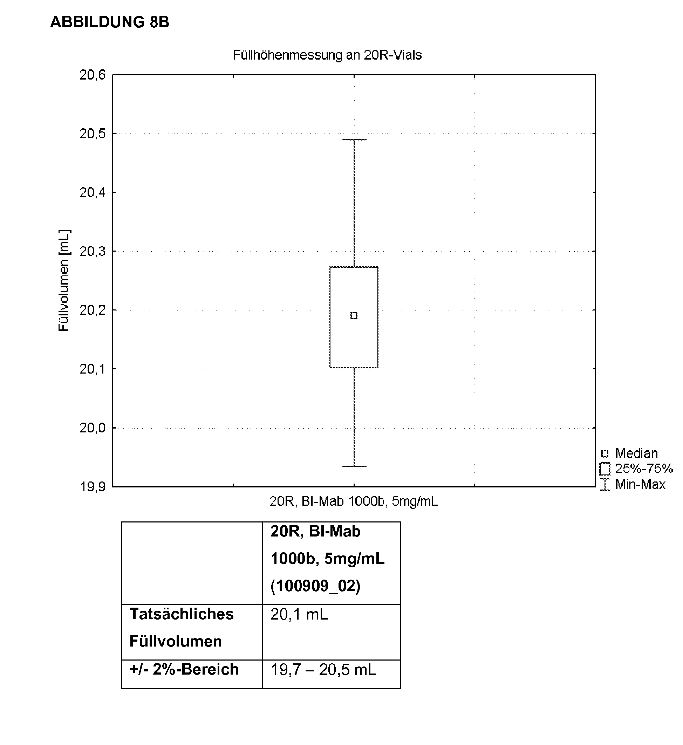

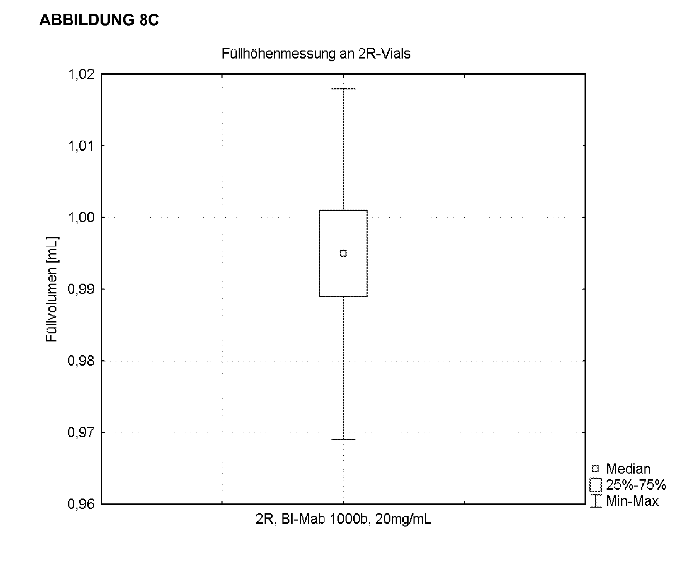

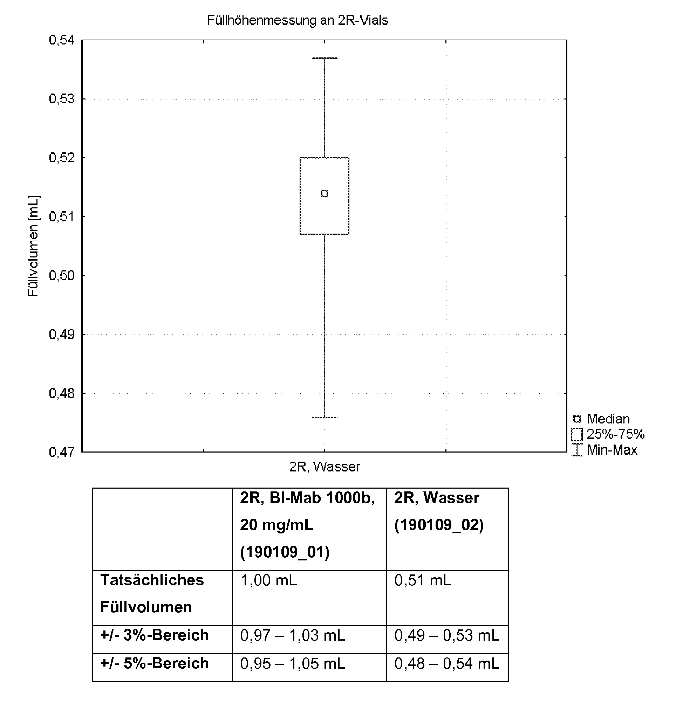

ABBILDUNG 8: GRAPHISCHE UND TABELLARISCHE DARSTELLUNG DER MESSERGEBNISSE DER VERSUCHSREIHEN AUS BEISPIEL 3

A: 10R, Wasser (090909_01) und 10R, BI-Mab 1000b, 5mg/mL (100909_01)
B: 20R, BI-Mab 1000b, 5mg/mL (100909_02)
C: 2R, BI-Mab 1000b, 20 mg/mL (190109_01) und 2R, Wasser (190109_02)

ABBILDUNG 9: SCHEMAZEICHNUNG FÜLLVOLUMENBESTIMMUNG DOPPELKAMMERKARPULE

B Aussendurchmesser, C Füllhöhe, D Wandstärke, 11 Doppelkammerkarpule, 12 Gummistopfen, 13 Bypass

**DETAILLIERTE BESCHREIBUNG DER ERFINDUNG**

Im Rahmen dieser Erfindungsbeschreibung verwendete Begriffe und Bezeichnungen haben folgende im Anschluss definierte Bedeutungen. Die allgemeinen Ausführungsformen "enthaltend" oder "enthält" schließt die speziellere Ausführungsform "bestehend aus" mit ein. Ferner werden "Einzahl" und "Mehrzahl" nicht begrenzend verwendet.

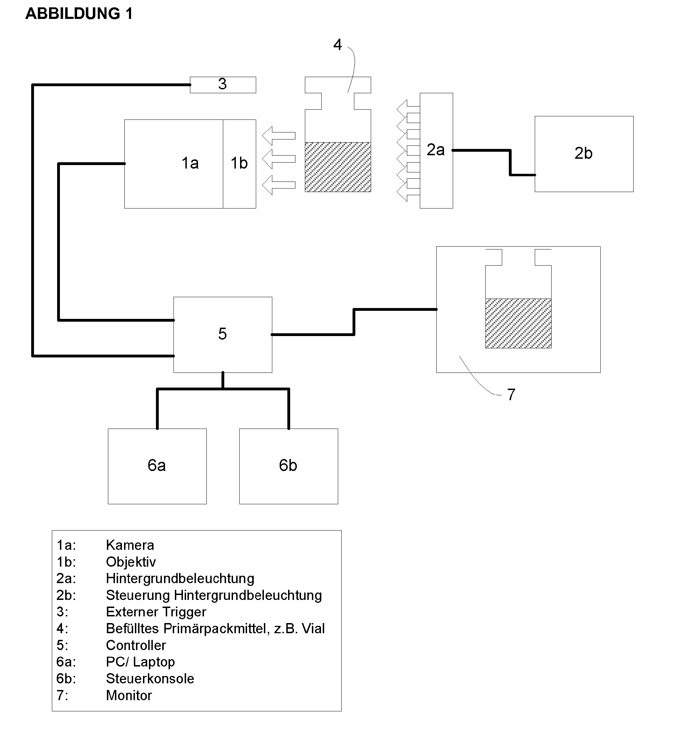

Der Begriff "Primärpackmittel" (siehe Abbildung 1 Bestandteil (4)) meint ein Behältnis (Gefäß o. Container), das in direktem Kontakt mit dem Arzneimittel steht.
Das Primärpackmittel muss für das erfindungsgemäße Verfahren durchsichtig bzw. transparent sein. Es wird mit einer Proteinlösung befüllt und anschließend der Füllstand mit dem erfindungsgemäßen optischen Verfahren gemessen. Bei dem besagten Primärpackmittel (4) handelt es sich bevorzugt um eine Injektionsflasche bzw. um ein Vial. Ebenfalls bevorzugt handelt es sich bei dem Primärpackmittel auch um eine Karpule, insbesondere um eine Doppelkammerkarpule, oder um eine Fertigspritze.
"Vial" meint Injektionsflasche bzw. Durchstichsflasche.
"Karpule" bzw. "Doppelkammerkarpule" meint eine Zylinderampulle für flüssige bzw. lyophilisierte Wirkstofflösungen. Bei Doppelkammerkarpulen befindet sich im vorderen Teil das Lyophilisat und im hinteren Teil das Lösungsmittel. Die beiden Kammern werden durch einen Gummistopfen voneinander getrennt.
Karpulen bzw. Doppelkammerkarpulen werden i.d.R. in einem Pen-System oder in einer Karpulenspritze verwendet.
Unter "Schaumbildung" versteht sich die Neigung einer Flüssigkeit zur Schäumung durch Einschluss von Gas. Der Grad der Schaumbildung beim Abfüllvorgang in ein Primärpackmittel ist von mehreren Faktoren abhängig, z.B. der Formulierung, der Proteinkonzentration, der Abfüllgeschwindigkeit oder der Geometrie der Abfüllnadel.

Der Begriff "Füllstand" bedeutet die Füllhöhe der Lösung in einem Primärpackmittel, insbesondere in einem Container/ Vial.

Der Begriff "Füllvolumen" meint das abgefüllte Lösungsvolumen im Primärpackmittel. Bevorzugt handelt es sich um eine Proteinlösung.

Der Begriff "Gut-Messung" bedeutet, dass das Füllvolumen eines Containers innerhalb einer festgelegten Toleranz, z.B. ± 3% vom tatsächlichen Wert gemessen wird.

Als "Fehlmessungen" werden alle Messergebnisse bezeichnet, bei denen eine korrekte Berechnung des Füllvolumens nicht möglich ist. Mögliche Ursachen für solche Fehlmessungen sind die Verwendung falscher Kanten bei der geometrischen Vermessung des Kamerabildes oder dass die notwendigen Bezugskanten gar nicht vom Programm gefunden werden. Wird das zu vermessende Primärpackmittel z.B. auf einer Seite von einem anderen Primärpackmittel berührt, so findet das Kameraprogramm u.U. keine oder eine falsche Kante zur Vermessung des Außendurchmessers

Der Begriff "Trigger" bezeichnet einen Auslöser bzw. Taktgeber.

Der Begriff "Controller" bezeichnet das Steuergerät des Kamerasystems.

Der Begriff "In-Prozess-Füllstandsmessung" bedeutet die Vermessung der Füllhöhe von einem mit Lösung befüllten Primärpackmittel, insbesondere Container/ Vial, während des laufenden Abfüllprozesses und die direkte Umrechnung dieser Füllhöhe auf ein Füllvolumen

"Proteine" sind Makromeleküle und gehören zu den Grundbausteinen aller Zellen. Menschliche Proteine können eine Größe von bis zu 3600 kDa haben.

Mit dem Begriff "Peptid", "Polypeptid" oder "Protein" sind Polymere von Aminosäuren bestehend aus mehr als zwei Aminosäureresten gemeint.

Weiterhin sind mit dem Begriff "Peptid", "Polypeptid" oder "Protein" Polymere von Aminosäuren bestehend aus mehr als 10 Aminosäureresten gemeint.

Der hier verwendete Begriff "Protein" meint insbesondere Polymere von Aminosäuren mit mehr als 20 und insbesondere von mehr als 100 Aminosäureresten.

Mit dem Begriff "Wirkstoffe" sind Substanzen gemeint, in der vorliegenden Anmeldung insbesondere Proteine, die in einem Organismus eine Wirkung bzw. eine Reaktion hervorrufen, z.B. Antikörper. Wird ein Wirkstoff zu therapeutischen Zwecken am Menschen oder am tierischen Körper angewandt so bezeichnet man ihn als Arzneimittel oder Medikament.

Mit der Abkürzung "MW" wird ein Messwert bezeichnet.

Die Erfindung betrifft ein Verfahren zur optischen Füllstandsmessung bei der aseptischen Abfüllung von Biopharmazeutika umfassend die folgenden Schritte:

> a. Transportieren eines mit einer Proteinlösung befüllten durchsichtigen Primärpackmittels (4), wobei das Füllvolumen kleiner bzw. gleich 100ml beträgt,
> b. Vorbeiführen des befüllten Primärpackmittels (4) an einer Kamera (1a) mit Beleuchtung,
> c. Steuerung der Bilderfassung über einen externen Trigger (3), der mit der Kamera (1a) über einen Controller (5) verknüpft ist,
> d. Ausgabe des Messergebnisses über den Controller (5),
> e. Anzeige auf einem Monitor (7) oder auf einem angeschlossenen PC (6a); wobei das Primärpackmittel (4) zum Zeitpunkt der Messung vereinzelt wird und hängt.

In einer bevorzugten Ausführungsform handelt es sich bei dem erfindungsgemäßen Verfahren um ein In-Prozeß-Verfahren.

In einer weiteren bevorzugten Ausführungsform des erfindungsgemäßen Verfahrens beträgt das Füllvolumen kleiner oder gleich 50ml, kleiner oder gleich 25ml, bevorzugt kleiner oder gleich 20ml.

In einer weiteren bevorzugten Ausführungsform des erfindungsgemäßen Verfahrens liegt das Füllvolumen in einem Bereich von 100ml bis 0.5ml, bevorzugt in einem Bereich von 25ml bis 2ml bzw. 20ml bis 1ml bzw. 20ml bis 0.5ml bzw. 10ml bis 0.5ml und besonders bevorzugt in einem Bereich von 2ml bis 0.5ml.

In einer spezifischen Ausführungsform des erfindungsgemäßen Verfahrens ist das Primärpackmittel:

> a. eine Injektionsflasche, z.B. 2R, 10R, 20R, 50ml oder 100ml,
> b. eine Karpule, z.B. eine Doppelkammerkarpule,
> c. eine Fertigspritze.

In einer spezifischen bevorzugten Ausführungsform des erfindungsgemäßen Verfahrens ist das Primärpackmittel eine 20R oder 2R Injektionsflasche.

In einer weiteren bevorzugten Ausführungsform ist das Primärpackmittel eine Doppelkammerkarpule.

In einer speziellen Ausführungsform des erfindungsgemäßen Verfahrens ist die Beleuchtung in Verfahrensschritt b) eine Hintergrundbeleuchtung (2a).

In einer bevorzugten Ausführungsform des erfindungsgemäßen Verfahrens hängt das Primärpackmittel senkrecht.

Die Erfindung betrifft weiterhin eine Apparatur zur optischen Füllstandsmessung bestehend aus einem Kamerasystem (1a), einer Vorrichtung (8) zur Vereinzelung der Primärpackmittel (4) und einer Vorrichtung (9) zur Aufhängung der Primärpackmittel (4).

In einer bevorzugten Ausführungsform umfasst die erfindungsgemäße Apparatur ein Sternrad (8) zur Vereinzelung der Primärpackmittel (4).

In einer besonders bevorzugten Ausführungsform ist die erfindungsgemäße Apparatur eine Apparatur zur optischen Füllstandsmessung gemäß Abbildung 5B.

Die im Folgenden aufgeführten Beispiele sind nicht limitierend bzw. beschränkend zu verstehen. Sie dienen lediglich zur Illustration der Erfindung.

**BEISPIELE**

BEISPIEL 1: MESSPRINZIP UND VORVERSUCHE

Abbildung 1 zeigt das Funktionsprinzip der optischen Füllstandsmessung mittels Kamerasystem. Das Vial wird per Transportsystem (Sternrad, Förderband...) an einer Kamera vorbeigeführt. Die Beleuchtung des Objekts für eine optimale Bildaufnahme erfolgt in der Regel durch eine Hintergrundbeleuchtung. Die Bilderfassung wird über einen externen Trigger gesteuert, der jedes einzelne Vial erfasst.

Kamera und Trigger sind über einen Controller, der die Software enthält, miteinander verknüpft. Die Ausgabe des Bildes und der Messergebnisse erfolgt direkt über einen Monitor, der ebenfalls mit dem Controller verbunden ist.

Angesteuert wird der Controller durch eine Steuerkonsole oder einen externen PC/Laptop.

Um die prinzipielle Machbarkeit der optischen Füllstandskontrolle mittels Kamerasystem zu prüfen, wurden zunächst die folgenden Vorversuche durchgeführt:

Vermessung von

- 20R Vials in Ruhe,
- 20R Vials auf einem Transportband und
- 2R Vials auf einem Transportband.

Die verwendeten Vials waren von Hand mit definierten Füllvolumina befüllt worden.

Außerdem wurde der Einfluss von Schaumbildung auf die Exaktheit der Füllstandsmessung betrachtet.

Abbildung 2 zeigt den Messaufbau bei diesen Vorversuchen.

Der Abstand zwischen der unteren Kante des Meniskus und der oberen Kante einer fest installierten Blende, die sich vor dem Vial befindet, wird an mehreren Stellen gemessen. Der Mittelwert dieser Messungen ergibt den Messwert "Füllhöhe".

Außerdem wird der Außendurchmesser des Vials gemessen, um eventuelle Packmittelschwankungen zu erfassen.

Das Füllvolumen in mL berechnet sich aus

$$[(Füllhöhe + Blendenhöhe – X) * π * (Außendurchmesser – 2 * Wandstärke\ s_1)^2/4)] / 1000$$

Die Wandstärke wird gemäß EN ISO 8362-1:2004 (siehe Abbildung 2 B und C) angenommen. Für den gewölbten Boden wird aufgrund der Maße aus EN ISO 8362-1:2004 (Abb. 2) und der damit zusammenhängenden Bodenwölbung und Radien ein Faktor X angenommen, der je nach Vialgröße variieren kann. Die Höhe der Blende ist eine feste Größe, kann aber je nach Messaufbau variiert werden.

**Messung in Ruhe**

Die Messergebnisse in Ruhe der 46 mit 15 mL bis 21 mL Wasser vorbefüllten Vials zeigten Schwankungen zwischen - 0.1 mL bis + 0.2 mL bezogen auf die nominalen Füllvolumina. Dies entspricht einer Größenordnung von ca. 1%.

**Messung auf Transportband**

**20R:**

Jedes der 46 mit Wasser befüllten Vials wurde mit 3 Durchläufen in Bewegung ohne Stopp auf einem Transportband vermessen.

Die Mittelwerte der gemessenen Volumina weisen eine mittlere Abweichung von maximal 0.2 mL auf

Von insgesamt 138 erzeugten Messwerten zeigten 6 (= 4.3 %) eine Abweichung von größer $\pm$ 0.5 mL, welche bei Standardabfüllungen mit einem Füllvolumen von 20.8 mL als Toleranz angegeben wird.

Bei Füllvolumina von >= 21.0 mL in einem 20R-Vial wurde festgestellt, dass der Meniskus schon leicht in den Schulterbereich des Vials ragt, so dass sich seine Krümmung verändert. Diese Veränderung der Geometrie muss bei der Umrechnung der Füllhöhe zum Füllvolumen berücksichtigt werden.

**2R:**

Jedes der 50 mit jeweils 1.0 mL Wasser befüllten Vials wurde 1x auf dem Transportband vermessen. Alle Messungen zeigten zuverlässig ein Füllvolumen innerhalb einer Spannweite von - 0.02 mL bis + 0.01 mL bezogen auf das eingewogene IST-Volumen.

**Einfluss Schaumbildung**

Der Effekt des Schäumens, der bei der Abfüllung von Proteinlösungen häufig auftritt, wurde mit Hilfe einer Modellproteinlösung betrachtet. Das Füllvolumen von 7 Vials wurde zunächst mittels Kamerasystem in Ruhe bestimmt. Anschließend wurde jedes Vial von Hand geschüttelt, 30 - 60 sec stehengelassen, bis kaum noch Luftblasen in der Flüssigkeit aufstiegen, und danach erneut das Füllvolumen mit Hilfe des Kamerasystems ermittelt.

Durch die Schaumbildung ermittelte das Kamerasystem ein um 0.1 mL bis 0.3 mL niedrigeres Füllvolumen als vor dem Schütteln. Die gemessenen Füllvolumina befanden sich trotz Schaumbildung alle innerhalb der Toleranz von $\pm$ 0.5 mL.

BEISPIEL 2: FÜLLSTANDSMESSUNG AUF ABFÜLLMASCHINE

Nachdem die Vorversuche eine prinzipielle Machbarkeit der optischen Füllstandsmessung mittels Kamerasystem gezeigt hatten, wurden weitere Versuche mit 20R Vials und mit 2R Vials auf zwei unterschiedlichen Abfüllmaschinen durchgeführt.

**20R Vials auf INOVA Nr. 5:**

Der Messaufbau wurde wie bei den Vorversuchen/ Beispiel 1 beschrieben auf der Abfüllmaschine umgesetzt.
100 Vials wurden mit einer Geschwindigkeit 3.5 SKT (ca. 1200 Vials/h) mit einem Soll-Füllvolumen von 20.0 mL mit G-Wasser befüllt und anschließend verstopft.

Am Auslauf des Sternrads wurde der Füllstand jedes Vials per Kamerasystem vermessen. Jedes einzelne Vial wurde vor und nach der Befüllung (ohne Stopfen) gewogen, um das exakte Füllvolumen zu ermitteln.
Der Mittelwert der 100 Messwerte beträgt 19.81 mL. Die Standardabweichung vom Mittelwert 0.49 mL.

78% der vermessenen Vials liegen innerhalb der für dieses Füllvolumen vorgegebenen Toleranz von $\pm$ 0.5 mL Abweichung vom Istwert.

Auffällig war, dass der Außendurchmesser bei 31 der 100 vermessenen Vials als außerhalb der Herstellungstoleranz detektiert wurde. Dies hat wahrscheinlich folgende Ursachen:

Unscharfe Bildaufnahme durch fehlenden Abstand zwischen

- Hintergrundbeleuchtung und Vial
  Ungenaue Messung des Außendurchmessers, da
- die Vials nicht vereinzelt wurden und
- die Messung des Außendurchmessers nur an einem einzigen Punkt durchgeführt wird.

Außerdem schwankte der Meniskus durch den direkt vor der Messung liegenden Ausschub der Vials aus dem Sternrad stark.
Der in diesem Versuch festgestellte Optimierungsbedarf wurde bei der Vermessung der 2R Vials auf der Abfüllmaschine B&S Nr. 4 berücksichtigt und die notwendigen mechanischen Voraussetzungen geschaffen.

Optimierung durch folgende Maßnahmen:

→ Hintergrundbeleuchtung wird nach hinten versetzt
→ Vereinzelung ist notwendig
→ Boden muß mitgemessen werden.

**2R Vials auf B&S Nr. 4:**

Der Auslauf der Abfüllmaschine B&S Nr. 4 wurde für die optische Füllstandsmessung mit einem Sternrad zur Vereinzelung der Vials versehen.
Der Zweck dieser Vereinzelung war die problemlose Messung des Außendurchmessers ohne direkt angrenzende Vials.
Der Außendurchmesser wird nicht mehr nur an einem Punkt sondern an 5 Punkten gemessen und der Mittelwert berechnet.
Zudem wurde die Hintergrundbeleuchtung zurückgesetzt, um die Bildschärfe zu optimieren.

**Führung der Vials auf Standschiene:**

Abbildung 3 A zeigt den ersten Umbau des Auslaufs inklusive des Sternrads zur Vereinzelung und der zurückgesetzten Hintergrundbeleuchtung. Das Sternrad hat keinen Antrieb sondern wird passiv durch das Nachfolgen neuer Vials aus dem Transportstern der Abfüllmaschine weiter gedreht. Die Führung der Vials erfolgt hier nur noch durch eine Führungsschiene im oberen Bereich des Vials, so dass der untere Teil gut beleuchtet und vermessen werden kann. Als Bezugspunkt für die Füllhöhenmessung wird hier anstatt der Blende aus Abbildung 2 A die Standschiene verwendet. Auch die Füllhöhenmessung wird - wie bereits in den Vorversuchen - nicht nur an einem sondern an mehreren Punkten des Meniskus durchgeführt, um eventuelle Schwankungen der Flüssigkeit auszugleichen.

Daraus ergibt sich für die Berechnung des Füllvolumens in mL folgende Formel:

$$[(MW\ Füllhöhe{-}Standschiene) * \pi * (MW\ Außendurchmesser{-}2 * Wandstärke\ s_1)^2/4)] / 1000$$

Die Wandstärke wird wie unter Beispiel 1 beschrieben gemäß EN ISO 8362-1:2004 eingesetzt.
Im Rahmen dieser Versuchreihe wurden verschiedene Einstellungen und Konfigurationen des Kamerasystems und der programmierten Vermessungsprogramme verwendet.
Die Vials wurden jeweils mit einem Soll-Füllvolumen von 1.0 mL auf der Abfüllmaschine B&S Nr. 4 mit G-Wasser befüllt und anschließend verstopft.
Der folgende Abschnitt zeigt eine Übersicht der durchgeführten Versuche, der dabei verwendeten Einstellungen und der statistischen Auswertung der Ergebnisse.

**(1) Tara-Brutto-Wägung aller Vials vor und nach Abfüllung und exakte Zuordnung des Kameramesswertes auf der Abfüllmaschine zum tatsächlichen Füllvolumen**

| Abfüllgeschwindigkeit: | 4 SKT $\overset{\wedge}{=}$ ca. 800 Vials/h |
|---|---|
| Füllhöhenmessung: | 20 Messpunkte mit je 3 pxl |
| Trigger-Verzögerung: | 850 ms |
| Belichtungszeit: | 1/240 ms |
| Anzahl vermessener Vials: | 100 Stk. |

Ergebnisse:

| | Start-Füllmengenkontrolle | 1.01 mL |
|---|---|---|
| Messwerte Kamera | MW der befüllten Vials | 1.01 mL |

(fortgesetzt)

| Messerte der Kamera: | MW $\pm$ 0.03 mL | 93% |
|---|---|---|
| Vials mit Füllvolumen... | < MW - 0.03 mL | 1% |
| | > MW + 0.03 mL | 6% |

**(2) Erhöhung der Abfüllgeschwindigkeit bei gleicher Füllmengeneinstellung der Abfüllmaschine und gleichen Kameraeinstellungen wie bei (1); keine Tara-Brutto-Wägung**

| | |
|---|---|
| Abfüllgeschwindigkeit: | 8 SKT $\stackrel{\wedge}{=}$ ca. 2500 Vials/h |
| Füllhöhenmessung: | 20 Messpunkte mit je 3 pxl |
| Trigger-Verzögerung: | 850 ms |
| Belichtungszeit: | 1/240 ms |
| Anzahl vermessener Vials: | 114 Stk. |

Ergebnisse:

| Start-Füllmengenkontrolle | 1.01 mL |
|---|---|
| Messwert der Kamera: MW der befüllten Vials | 1.01 mL |
| Messerte der Kamera: Vials mit Füllvolumen 0.97 - 1.03 mL[1] | 72% |
| [1] Die in internen Herstellanweisungen angegebenen Abfülltoleranzen für solch kleine Volumina liegt bei +/- 0.03 mL vom Sollfüllvolumen, das in diesem Fall bei 1.00 liegt | |

**(3) Erhöhung der Messgenauigkeit bei Abfüllgeschwindigkeit 8SKT durch geänderte Kameraeinstellungen; keine Tara-Brutto-Wägung**

| | |
|---|---|
| Abfüllgeschwindigkeit: | 8 SKT $\stackrel{\wedge}{=}$ ca. 2500 Vials/h |
| Füllhöhenmessung: | 14 Messpunkte mit je 2 pxl |
| Trigger-Verzögerung: | 1100 ms |
| Belichtungszeit: | 1/120 ms |
| Anzahl vermessener Vials: | 111 Stk. |

Ergebnisse:

| Start-Füllmengenkontrolle | 1.00 mL |
|---|---|
| Messwert der Kamera: MW der befüllten Vials | 0.98 mL |
| Messerte der Kamera: Vials mit Füllvolumen 0.97 - 1.03 mL[1] | 81% |

**(4) Verifizierung der geänderten Kameraeinstellungen für niedrigere Geschwindigkeiten; keine Tara-Brutto-Wägung**

| Abfüllgeschwindigkeit: | 4 SKT $\overset{\wedge}{=}$ ca. 800 Vials/h |
| Füllhöhenmessung: | 14 Messpunkte mit je 2 pxl |
| Trigger-Verzögerung: | 1100 ms |
| Belichtungszeit: | 1/120 ms |
| Anzahl vermessener Vials: | 107 Stk. |

Ergebnisse:

| Start-Füllmengenkontrolle | 1.00 mL |
|---|---|
| Messwert der Kamera: MW der befüllten Vials | 0.99 mL |
| Messerte der Kamera: Vials mit Füllvolumen 0.97 - 1.03 mL[1] | 81% |

Abbildung 4 zeigt die Symmetrie und die Streuungen der Ergebnisse aus den Versuchen (1) bis (4) inkl. der Interquartilen Ranges und der Spannweiten.

Die Erhöhung der Abfüllgeschwindigkeit im zweiten Versuch führte zunächst zu einer deutlichen Streuung der Messwerte. Die Spannweite wurde im Vergleich zum ersten Versuch nahezu verdoppelt.

Durch die Anpassung der Kameraeinstellungen und die leichten Veränderungen am Messprogramm konnte die Streuung der Messwerte in den Versuchen (3) und (4) sowohl für die schnelle als auch für die langsame Abfüllgeschwindigkeit wieder reduziert werden. Der leichte Versatz aller Messpunkte der Versuche (3) und (4) nach unten liegt zum einen an daran, dass die tatsächlich eingestellte Füllmenge 0.01 mL niedriger lag, als bei den vorangegangenen Versuchen, und zum anderen an den veränderten Einstellungen.

Die bisher aufgetretenen Messungenauigkeiten bzw. Abweichungen vom tatsächlichen IST-Füllvolumen haben voraussichtlich zwei Ursachen:

- Leichtes Anheben der Vials durch Transport mit Sternrad auf Standschiene. Da sich die Füllhöhenmessung auf die untere Kante der Standschiene bezieht, wird die Füllstandsmessung bei Vials, die zum Zeitpunkt der Messung leicht von der Standschiene abgehoben sind, verfälscht.
- Schwankungen der Dicke der Vialböden zwischen verschiedenen Vialchargen.

Um diesen Optimierungsbedarf umzusetzen, wurden weitere Umbauten im Bereich des Sternrads durchgeführt und in mehreren Versuchen getestet (siehe folgender Versuchsaufbau).

**Aufhängung der Vials im Halsbereich**

Die Führung der Vials erfolgt nach dem Umbau über zwei Schienen im Halsbereich, an denen die Vials mit ihrem Rollrand aufgehängt werden (siehe Abbildung 5 A + B).

Die Standschiene wird im Bereich der Kameraaufnahme nach unten abgesenkt (zwischen den gestrichelten Linien in Abb. 5B), um eine klare Abgrenzung des Vialbodens zu ermöglichen.

Mit diesem mechanischen Aufbau wurden die in Abbildung 6A dargestellten Versuchsreihen durchgeführt. Für alle Versuche gelten die Parameter

- Abfüllgeschwindigkeit: 8 SKT (2500 Vials/h)
- eingestelltes Füllvolumen: 1.01 mL
- Vorbehandlung der Vials: gespült, heißluftsterilisiert
- Belichtungszeit: 1/240 ms

In vorangegangenen Versuchen wurde festgestellt, dass die geometrische Form des Meniskus bei neuen, unbehandelten Vials gleichmäßiger ist als bei Vials, die vor Verwendung gespült und heißluftsterilisiert wurden. Dies lässt sich auf die Oberflächenrauhigkeit der behandelten Glasoberfläche zurückführen.

Um produktionsnahe Bedingungen zu schaffen, wurden für die hier beschriebenen Versuchsreihen nur gespülte und heißluftsterilisierte Vials verwendet.

Die Vials wurden jeweils mit einem Soll-Füllvolumen von 1.0 mL auf der Abfüllmaschine B&S Nr. 4 mit G-Wasser befüllt und anschließend verstopft.

Die Berechnung des Füllvolumens in mL erfolgte für die ersten beiden Versuchsreihen gemäß

$$[(MW \text{ Füllhöhe–Annahme Vialboden}) * \pi * (MW \text{ Außendurchmesser–2} * \text{ Wandstärke } s_1)^2/4)] /1000$$

Da in der dritten Versuchsreihe der Vialboden an einer Stelle mitvermessen wurde, ergab sich für die Berechnung des Füllvolumens in mL hier folgende Formel:

$$[(MW \text{ Füllhöhe } – \text{ Bodenstärke } * 0.9) * \pi * (MW \text{ Außendurchmesser } – 2 * \text{ Wandstärke } s_1)^2/4)] / 1000$$

Bei dem Faktor 0.9 handelt es sich um einen empirisch ermittelten Wert, der die Bodenwölbung des 2R-Vials berücksichtigt.

Die Wandstärke wird bei beiden Formeln wie in Abbildung 2A (siehe auch Beispiel 1 Berechnung Füllvolumen) beschrieben gemäß EN ISO 8362-1:2004 eingesetzt.

Die Versuchsreihen wurden anhand der Kriterien

- Prozentualer Anteil an Fehlmessungen beim Außendurchmesser
- Prozentualer Anteil an Fehlmessungen bei der Füllhöhe
- Interquartile Range
- Spannweite
- Prozentualer Anteil Ausreißer
- Prozentualer Anteil Extremwerte

beurteilt und miteinander verglichen.

Abbildung 6B zeigt die Darstellung der Versuchsergebnisse der drei beschriebenen Versuchsreihen als Box-Plot. Die Fehlmessungen des Außendurchmessers und der Füllhöhe wurden bei dieser Auswertung nicht berücksichtigt.

Es wird deutlich, dass die Messwerte der drei Versuchsreihen eine sehr symmetrische Verteilung aufweisen. Wie auch die Werte der Spannweiten in Abbildung 6A zeigen, wird die angestrebte Genauigkeit von $\pm$ 0.03 mL bis auf wenige Ausreißer und Extremwerte erreicht.

Der bei allen Versuchsreihen aufgetretene leichte Versatz zum Sollwert nach oben bzw. unten fließt nicht in die Beurteilung der Messreihen ein, da er durch einen Korrekturfaktor behoben werden könnte.

Insgesamt zeigte die dritte Versuchsreihe den geringsten Anteil an Fehlmessungen und an Ausreißern und Extremwerten.

Eine weitere Reduktion der Fehlmessungen bei der Messung des Außendurchmessers könnte durch eine Optimierung der mechanischen Vialführung erreicht werden. Es müsste verhindert werden, dass die angrenzenden Vials das zu vermessende Vial zum Zeitpunkt der Messung berühren können.

Dieser Punkt wird für den Umbau weiterer Abfüllmaschinen berücksichtigt.

Eine Reduktion der Fehlmessungen bei der Füllhöhe und eine Erhöhung der Messgenauigkeit, so dass der Anteil an Messwerten außerhalb der Toleranz von $\pm$ 0.03 mL weiter gesenkt wird, könnte mittels folgender technischer Maßnahmen realisiert werden:

- Verwenden einer S/W-Kamera (bisher Farb-Kamera)
- Verwenden eines Objektivs, das eine größere Aufnahme des Messobjekts ermöglicht
- Optimierung der Hintergrundbeleuchtung für bessere Kontraste

BEISPIEL 3: FÜLLSTANDSMESSUNG AUF ABFÜLLMASCHINEN MIT OPTIMIERTER MECHANIK UND OPTIMIERTEN EINSTELLUNGEN

Auf Basis der unter "BEISPIEL 2" beschriebenen Versuche wurden sowohl mechanische Anpassungen an den Abfüllmaschinen als auch kamera- und programmtechnische Optimierungen vorgenommen.

Für die Formate 2R, 10R und 20R wurden die Formatteile für die Vialvereinzelung sowie die Halterungen für Kamera und Hintergrundbeleuchtung verbessert.

Die Höhe der Kamera, die Entfernung vom Messobjekt sowie das geeignete Objektiv wurden für jedes der drei Vialformate bestmöglich gewählt und eingestellt.

Die Kameraprogramme der drei Vialformate wurden für eine Steigerung der Präzision optimiert und analog zueinander aufgebaut (s. Abbildung 7).

Die wichtigsten Anpassungen sind:

- Vermessung des Außendurchmessers nur zur Skalierung von Pixel auf Millimeter. Für die Berechnung des Füllvolumens wird der Literaturwert verwendet.
- Keine direkte Vermessung der Bodenstärke. Für die Berechnung des Füllvolumens wird eine Konstante verwendet, die empirisch für jedes Vialformat ermittelt wird.
- Messung der Füllhöhe vom Meniskus zum Vialboden an 2 bis 5 Punkten und Bildung eines Mittelwerts
- Nachführung der Messfenster in x- und y-Richtung
- Winkelausgleich entlang der y-Achse bei leicht schräg hängenden Vials

Daraus ergibt sich folgende Berechnungsformel für das tatsächliche Füllvolumen:

$$[(MW\ Füllhöhe - Bodenstärke) * \pi * (Außendurchmesser\ d_1 - 2 * Wandstärke\ s_1)^2/4)] / 1000$$

Die Bodenstärke ist die bereits erwähnte, empirisch ermittelte Konstante.

Für den Außendurchmesser $d_1$ und die Wandstärke $s_1$ werden die Literaturwerte gemäß Abbildung 2C verwendet.

Mit diesen optimierten Einstellungen wurden u.a. folgende Versuchsreihen durchgeführt:

| Versuch Nr. | Vialformat | Medium | Eingestelltes Füllvolumen | Abfüllgeschwindigkeit | Anzahl Vials (=n) |
|---|---|---|---|---|---|
| 190109_02 | 2R | Wasser | 0,51 mL | ca. 2500 Vials/h | 224 |
| 190109_01 | 2R | BI-Mab 1000b 20 mg/mL | 1,00mL | ca. 2500 Vials/h | 365 |
| 090909_01 | 10R | Wasser | 10,3mL | ca. 1400 Vials/h | 354 |
| 100909_01 | 10R | BI-Mab 1000b 5 mg/mL | 10,4mL | ca. 1400 Vials/h | 345 |
| 100909_02 | 20R | BI-Mab 1000b 5 mg/mL | 20,1mL | ca. 1400 Vials/h | 404 |

Bei BI-Mab 1000b handelt es sich um eine Proteinlösung, die dafür bekannt ist, bei der Abfüllung zu schäumen. Die Proteinlösung wird in den Konzentrationen 5mg/mL und 20mg/mL verwendet.

Die Versuchsreihen zeigten folgende Ergebnisse:

| Versuch Nr. | Eingestelltes Füllvolumen | Verteilung der Messwerte bezogen auf das eingestellte Füllvolumen Innerhalb. ... | | |
|---|---|---|---|---|
| | | $\pm$ **5%** | $\pm$ **3%** | $\pm$ **2%** |
| 190109_02 | 0,51 mL | 99,6% | 94,2% | n/a |
| 190109_01 | 1,00mL | 100% | 99,7% | 95,9% |
| 090909_01 | 10,3mL | 100% | 100% | 96,9% |

(fortgesetzt)

| Versuch Nr. | Eingestelltes Füllvolumen | Verteilung der Messwerte bezogen auf das eingestellte Füllvolumen Innerhalb. ... | | |
|---|---|---|---|---|
| | | ± 5% | ± 3% | ± 2% |
| 100909_01 | 10,4mL | 100% | 100% | 95,1% |
| 100909_02 | 20,1mL | 100% | 100% | 100% |

Je größer das Füllvolumen ist, umso geringer sind die prozentualen Abweichungen der gemessenen Werte vom tatsächlichen Füllvolumen.

Die Messwerte der mit Proteinlösung durchgeführten Versuchsreihen zeigten vergleichbare Ergebnisse wie die Messwerte der mit Wasser durchgeführten Versuchsreihen.

Die Abbildungen 8A bis 8C zeigen eine graphische Darstellung der Messergebnisse der Versuchsreihen.

**Patentansprüche**

1.  Ein Verfahren zur optischen Füllstandsmessung bei der aseptischen Abfüllung von Biopharmazeutika umfassend die folgenden Schritte:

     a. Transportieren eines mit einer Proteinlösung befüllten durchsichtigen Primärpackmittels (4), wobei das Füllvolumen kleiner bzw. gleich 100ml beträgt,
     b. Vorbeiführen des befüllten Primärpackmittels (4) an einer Kamera (1a) mit Beleuchtung,
     c. Steuerung der Bilderfassung über einen externen Trigger (3), der mit der Kamera (1a) über einen Controller (5) verknüpft ist,
     d. Ausgabe des Messergebnisses über den Controller (5),
     e. Anzeige auf einem Monitor (7) oder auf einem angeschlossenen PC (6a);

    wobei das Primärpackmittel (4) zum Zeitpunkt der Messung vereinzelt wird und hängt.

2.  Verfahren gemäß Anspruch 1 **dadurch gekennzeichnet, dass** es sich um ein In-Prozeß-Verfahren handelt.

3.  Verfahren gemäß Anspruch 1 oder 2 **dadurch gekennzeichnet, dass** das Füllvolumen kleiner oder gleich 50ml, kleiner oder gleich 25ml, bevorzugt kleiner oder gleich 20ml beträgt.

4.  Verfahren gemäß den Ansprüchen 1 bis 3 **dadurch gekennzeichnet, dass** das Füllvolumen in einem Bereich von 100ml bis 0.5ml liegt, bevorzugt in einem Bereich von 25ml bis 2ml bzw. 20ml bis 1ml und besonders bevorzugt in einem Bereich von 2ml bis 0.5ml liegt.

5.  Verfahren gemäß den Ansprüchen 1 bis 3 **dadurch gekennzeichnet, dass** das Primärpackmittel

     a. eine Injektionsflasche ist, z.B. 2R, 10R, 20R, 50ml oder 100ml,
     b. eine Karpule ist, z.B. eine Doppelkammerkarpule,
     c. eine Fertigspritze ist.

6.  Verfahren gemäß Anspruch 5 **dadurch gekennzeichnet, dass** das Primärpackmittel eine 20R, eine 10R oder 2R Injektionsflasche ist.

7.  Verfahren gemäß den Ansprüchen 1 bis 6 **dadurch gekennzeichnet, dass** die Beleuchtung in Verfahrensschritt b) eine Hintergrundbeleuchtung (2a) ist.

8.  Verfahren gemäß den Ansprüchen 1 bis 6 **dadurch gekennzeichnet, dass** das Primärpackmittel senkrecht hängt.

9.  Eine Apparatur zur optischen Füllstandsmessung bestehend aus einem Kamerasystem (1a), einer Vorrichtung (8) zur Vereinzelung der Primärpackmittel (4) und einer Vorrichtung (9) zur Aufhängung der Primärpackmittel (4).

**10.** Apparatur gemäß Anspruch 9, welche zur Vereinzelung der Primärpackmittel (4) ein Sternrad (8) umfasst.

**11.** Apparatur gemäß Anspruch 9 oder 10 umfassend Führungsschienen (9), eine Standschiene (10a) und einen abgesenkten Schienenbereich (10b) zur Aufhängung der Primärpackmittel (4).

**12.** Eine Apparatur zur optischen Füllstandsmessung gemäß Abbildung 5B.

**ABBILDUNG 1**

1a:     Kamera
1b:     Objektiv
2a:     Hintergrundbeleuchtung
2b:     Steuerung Hintergrundbeleuchtung
3:      Externer Trigger
4:      Befülltes Primärpackmittel, z.B. Vial
5:      Controller
6a:     PC/ Laptop
6b:     Steuerkonsole
7:      Monitor

**ABBILDUNG 2**

**A:**

Gemessene Größen:
B:      Aussendurchmesser
C:      Füllhöhe

D:      Blendenhöhe (konstanter Wert)
E:      Wandstärke (Literaturwert)

**B:**                                    **Ausschnitt:**

A:      Rechtwinkligkeitstoleranz
X:      Ausschnitt

**ABBILDUNG 2 C:**

Dimensions in millimetres

| Größen-bezeich-nung der Injek-tions-flasche Size desig-nation of injec-tion vial | Randvoll-volumen Overflow capacity ml | $a$ mm | $d_1$ mm | $d_2$ mm | $d_3$ mm | $d_4$ mm | $h_1$ mm | $h_2$ mm | $h_3$ mm | $r_1$ mm | $r_2$ mm | $s_1$ mm | $s_2$ mm | $t$ mm | Ge-wicht Mass g |
|---|---|---|---|---|---|---|---|---|---|---|---|---|---|---|---|
| | Tol. | Tol. | Tol. | $^{+0,2}_{-0,3}$ | max. | ± 0,2 | Tol. | min. | Tol. | ≈ | ≈ | Tol. | min. | max. | ≈ |
| 2R | 4 | ± 0,5 | 1 | 16 | ± 0,15 | 13 | 10,5 | 7 | 35 | 22 | 8 | | 2,5 | 1,5 | | | 0,5 | | 5 |
| 4R | 6 | | | | | | | | 45 | 32 | | | | | | | | | 6,1 |
| 6R | 10 | | | 22 | | | | | 40 | 26 | ± 0,5 | 8,5 | ± 0,5 | 3,5 | | 1 | ± 0,04 | | 0,7 | 8,3 |
| 8R | 11,5 | | 1,2 | | ± 0,2 | | 16,5 | | 45 | 31 | | | | | 2 | | | | | 9,4 |
| 10R | 13,5 | | ± 1 | 24 | | | | | 45 | 30 | | 9 | | 4,0 | | | | 0,7 | | 10,2 |
| 15R | 19 | | | | | 20 | | 12,6 | 60 | 45 | | | | | | | | | | 12,8 |
| 20R | 26 | | | | | | | 17,5 | 55 | 35 | | | | | | | | | | 17,4 |
| 25R | 32,5 | ± 1,5 | 1,5 | 30 | ± 0,25 | | | | 65 | 45 | ± 0,7 | 10 | ± 0,75 | 5,5 | 2,5 | 1,2 | ± 0,05 | | 1 | 20 |
| 30R | 37,5 | | | | | | | | 75 | 55 | | | | | | | | | | 22,7 |

**ABBILDUNG 3 A**

| | |
|---|---|
| 1a: | Kamera |
| 1b: | Objektiv |
| 2a: | Hintergrundbeleuchtung |
| 3: | Externer Trigger |
| 4: | Befülltes Primärpackmittel, z.B. Vial |
| 8: | Sternrad |
| 9: | Führungsschienen |
| 10a: | Standschiene |

**ABBILDUNG 3B**

| 1a: | Kamera |
|---|---|
| 1b: | Objektiv |
| 2a: | Hintergrundbeleuchtung |
| 3: | Externer Trigger |
| 4: | Befülltes Primärpackmittel, z.B. Vial |
| 8: | Sternrad |
| 9: | Führungsschiene |
| 10a: | Standschiene |
| | |
| C: | Füllhöhe (gemessen) |

**ABBILDUNG 4**

**ABBILDUNG 5A**

| | |
|---|---|
| 1a: | Kamera |
| 1b: | Objektiv |
| 2a: | Hintergrundbeleuchtung |
| 3: | Externer Trigger |
| 4: | Befülltes Primärpackmittel, z.B. Vial |
| 8: | Sternrad |
| 9: | Führungsschienen |
| 10b: | Standschiene, abgesenkter Bereich |

**ABBILDUNG 5B**

| | |
|---|---|
| 1a: | Kamera |
| 1b: | Objektiv |
| 2a: | Hintergrundbeleuchtung |
| 3: | Externer Trigger |
| 4: | Befülltes Primärpackmittel, z.B. Vial |
| 8: | Sternrad |
| 9: | Führungsschienen |
| 10a: | Standschiene |
| 10b: | Standschiene, abgesenkter Bereich |

## ABBILDUNG 6A

| Kurzbeschreibung | Füllhöhenmessung mittig mit 4 Segmenten; Messung des Außendurchmessers mit 4 Segmenten | Füllhöhenmessung mittig mit 4 Segmenten; Messung des Außendurchmessers mit 4 Segmenten; Trigger-Verzögerung herabgesetzt | Füllhöhenmessung seitlich mit 2 Segmenten; Messung des Außendurchmessers mit einem breiten Segment; Vermessung der Bodenstärke in einem Bereich |
|---|---|---|---|
| **Abbildung** | | | |
| **Annahme Vialboden** | 0,4 mm | 0,4 mm | --- |
| **Trigger-Verzögerung** | 1100 ms | 850 ms | 1000 ms |
| **eingestelltes Füllvolumen** | 1,01 mL | 1,01 mL | 1,01 mL |
| **Fehlmessungen Außendurchmesser** | 2,8% | 1,3% | 0,6% |
| **Fehlmessungen Füllhöhe** | 1,1% | 1,3% | 1,7% |
| **ΣFehlmessungen** | **3,9%** | **2,6%** | **2,3%** |
| **IQR** | 0,01 | 0,01 | 0,01 |
| **Spannweite** | 0,04 | 0,04 | 0,05 |
| **Ausreißer** | 4,7% | 4,8% | 2,3% |
| **Extremwerte** | 2,3% | 6,2% | 1,8% |
| **ΣAusreißer + Extremwerte** | **7,0%** | **11,0%** | **4,1%** |
| **Anteil Gut-Messungen** | **89,1%** | **86,4%** | **93,6%** |

**ABBILDUNG 6B**

**ABBILDUNG 7**

y-Achse

AD

x-Achse

Winkelnachführung

**ABBILDUNG 8A**

Füllhöhenmessung an 10R-Vials

|  | 10R, Wasser (090909_01) | 10R, BI-Mab 1000b, 5mg/mL (100909_01) |
|---|---|---|
| **Tatsächliches Füllvolumen** | 10,3 mL | 10,4 mL |
| **+/- 3%-Bereich** | 10,0 – 10,6 mL | 10,1 – 10,7 mL |

**ABBILDUNG 8B**

Füllhöhenmessung an 20R-Vials

20R, BI-Mab 1000b, 5mg/mL

- ◻ Median
- ▢ 25%-75%
- ⊥ Min-Max

| | 20R, BI-Mab 1000b, 5mg/mL (100909_02) |
|---|---|
| **Tatsächliches Füllvolumen** | 20,1 mL |
| **+/- 2%-Bereich** | 19,7 – 20,5 mL |

**ABBILDUNG 8C**

Füllhöhenmessung an 2R-Vials

Füllhöhenmessung an 2R-Vials

|  | Median |
|---|---|
|  | 25%-75% |
|  | Min-Max |

2R, Wasser

|  | 2R, BI-Mab 1000b, 20 mg/mL (190109_01) | 2R, Wasser (190109_02) |
|---|---|---|
| Tatsächliches Füllvolumen | 1,00 mL | 0,51 mL |
| +/- 3%-Bereich | 0,97 – 1,03 mL | 0,49 – 0,53 mL |
| +/- 5%-Bereich | 0,95 – 1,05 mL | 0,48 – 0,54 mL |

**ABBILDUNG 9**

| B | Aussendurchmesser |
| C | Füllhöhe |
| D | Wandstärke |
| | |
| 11 | Doppelkammerkarpule |
| 12 | Gummistopfen |
| 13 | Bypass |

Europäisches
Patentamt

European
Patent Office

Office européen
des brevets

## EUROPÄISCHER RECHERCHENBERICHT

Nummer der Anmeldung

EP 09 17 7989

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2006/178578 A1 (TRIBBLE DENNIS [US] ET AL TRIBBLE DENNIS [US] ET AL) 10. August 2006 (2006-08-10) | 1-5,7-10 | INV. G01F23/292 |
| A | * Absätze [0048] - [0061] * ----- | 6,11-12 | |
| Y | US 4 956 560 A (SMITH JR BRUCE D [US] ET AL) 11. September 1990 (1990-09-11) * Spalten 3-5; Abbildungen 1-8 * ----- | 1,9 | |
| Y | US 3 765 533 A (HART E ET AL) 16. Oktober 1973 (1973-10-16) * Spalten 1-2, 6-7; Abbildungen 1,5,6,8 * ----- | 1,9 | |
| A | US 2004/135090 A1 (ITOH TERUAKI [JP]) 15. Juli 2004 (2004-07-15) * das ganze Dokument * ----- | 1-12 | |

RECHERCHIERTE
SACHGEBIETE (IPC)

G01F

Der vorliegende Recherchenbericht wurde für alle Patentansprüche erstellt

| Recherchenort | Abschlußdatum der Recherche | Prüfer |
|---|---|---|
| München | 2. März 2010 | Fenzl, Birgit |

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 09 17 7989

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

02-03-2010

| Im Recherchenbericht angeführtes Patentdokument | Datum der Veröffentlichung | Mitglied(er) der Patentfamilie | Datum der Veröffentlichung |
|---|---|---|---|
| US 2006178578 A1 | 10-08-2006 | WO 2006086222 A2 | 17-08-2006 |
| US 4956560 A | 11-09-1990 | KEINE | |
| US 3765533 A | 16-10-1973 | KEINE | |
| US 2004135090 A1 | 15-07-2004 | CN 1512174 A | 14-07-2004 |
| | | JP 2004212216 A | 29-07-2004 |
| | | KR 20040060756 A | 06-07-2004 |

EPO FORM P0461

Für nähere Einzelheiten zu diesem Anhang : siehe Amtsblatt des Europäischen Patentamts, Nr.12/82